# EUROPEAN PATENT APPLICATION

(11) **EP 4 227 744 A1**
(43) Date of publication of application: **16.08.2023**
(21) Application number: 22156590.6
(22) Date of filing: 14.02.2022
(51) Int. Cl.: G05B 9/02, G05B 19/414, G05B 19/042

(54) **CONTROL ARRANGEMENT, METHOD, AND COMPUTER PROGRAM FOR CONTROLLING AN ELECTRONIC DEVICE, CONTROL PLATFORM COMPRISING THE CONTROL ARRANGEMENT, METHOD FOR TRAINING A MACHINE LEARNING MODEL, AND COMPUTER-READABLE MEDIUM**

(71) Applicant: ABB Schweiz AG, 5400 Baden (CH)
(72) Inventor: SIVANTHI, Thanikesavan, 5303 Würenlingen (CH); RUEETSCHI, Andrea, 5405 Baden (CH)
(74) Representative: Qip Patentanwälte Dr. Kuehn & Partner mbB

(57) **Abstract**

A control arrangement (22) for controlling an electronic device (26), is provided. The control arrangement (22) comprises: an inner controller (30) being coupled to the electronic device (26) and being configured for generating at least one control signal for controlling the electronic device (26) depending on at least one instruction signal from an outer controller (50); and a smart controller (32) coupled to the inner controller (30) and being configured for providing at least one substitute instruction signal for controlling the electronic device (26) to the inner controller (30) if an abnormality related to a signal traffic between the inner controller (30) and the outer controller (50) is detected.

## Description

### FIELD OF THE INVENTION

The invention relates to the field of distributed controlling of electronic devices. In particular, the invention relates to: a control arrangement, a method, and a computer program for controlling an electronic device; to a control platform comprising the control arrangement and a remote edge platform communicating with the control arrangement; to a method for controlling an electronic device; and to a method for training a machine learning model. The invention further relates to computer programs for carrying out the corresponding of the above methods, and to computer-readable media in which the corresponding computer programs are stored.

### BACKGROUND OF THE INVENTION

Conventional control platforms for electronic devices, e.g. for power converters, in particular switched-mode power converters, typically integrate a real-time process for managing local feedback control stages, together with remote applications for high-level control and electronic device integration. A conventional control platform may be subdivided into an outer controller that regulates system-level, often mechanical, quantities that depend on the electronic device to be controlled, an inner controller that regulates voltages and currents across the electronic device, a modulator that generates control actions under the control of the inner controller, and an observer that samples and processes sensor signals of sensors related to the electronic device. Multi-rate discrete algorithms of the outer controllers may be executed and/or may act in the milliseconds range while those of the other, "inner" components may be executed and/or may act in the microseconds range.

Next generation control platforms may transition towards standardized industrial Internet-of-Things and may embrace advanced communication technologies for real-time data transfers, like Time Sensitive Networking (TSN) and 5G that guarantee network synchronization and latencies at the low milliseconds range. This may facilitate emerging business models where, for instance, a customer co-develops applications or sections of application for the outer controller on a shared platform. Migrating outer control loops to the edge may also enable advanced centralized algorithms to leverage on distributed "big" data in order to boost the electronic device reliability and performance.

Over the product lifecycles control platforms undergo periodical maintenance of their software and firmware components e.g. security updates or patching, software updates, etc. Unless a redundant control platform is available, this may require an interruption of the corresponding semiconductors switching, followed by a complete de-energizing of the whole system. This may have a major cost impact on applications that require uninterrupted operations like e.g. industrial drives and/or grid-side converters for power generation. In fact, for large wind farms, the process of restoring the power after an interruption, could last a few hours.

The transition towards next generation control platforms with more control functionalities concentrated at the edge, will further challenge those engineering operations and the reliability of the whole system. In fact, as the control platform integrates more customer and third-party software releases for the outer controller and in case for auxiliary services, a rate of upgrades would increase accordingly. While performing the upgrade, reference outputs from the outer controller for the inner controller may be unavailable for prolonged time intervals. Furthermore, if the upgraded software component is compromised or defective, malicious instruction signals may be broadcasted to the inner controller after the upgrade.

A quality-of-service between the outer controller and the inner controller may also decrease by switching to wireless technologies, like 5G, when compared to legacy wired point-to-point communication media like optical fibers. Network outages, congestions or interferences could impair the device ability to correctly receive the control commands in form of the instruction signals.

### DESCRIPTION OF THE INVENTION

Therefore, it is an objective of the present invention to provide a control arrangement for controlling an electronic device, wherein the control arrangement enables to provide an uninterrupted controlling of an electronic device and/or wherein the control arrangement is applicable for a control platform, e.g. a real-time control platform, where control algorithms are partitioned between an outer controller of the control platform and inner controller of the control platform.

It is an objective of the present invention to provide a method for controlling an electronic device, wherein the method enables to provide an uninterrupted controlling of an electronic device and/or wherein the method is applicable for a control platform, e.g. a real-time control platform, where control algorithms are partitioned between an outer controller of the control platform and inner controller of the control platform.

It is an objective of the present invention to provide a method for training a machine learning model for providing at least one substitute instruction signal, such that the machine learning model may contribute to an uninterrupted controlling of an electronic device, in particular in a control platform, e.g. a real-time control platform, where control algorithms are partitioned between an outer controller of the control platform and inner controller of the control platform.

It is another objective of the present invention to provide one or two computer programs configured for carrying out one or, respectively, two of the above methods, and/or computer-readable media, on which the corresponding computer programs are stored.

These objectives are achieved by the subject-matter of the independent claims. Further exemplary embodiments are evident from the dependent claims and the following description.

In particular, an objective of the present invention is achieved by a control arrangement for controlling an electronic device, the control arrangement comprising: an inner controller being coupled to the electronic device and being configured for generating at least one control signal for controlling the electronic device depending on at least one instruction signal from an outer controller; and a smart controller coupled to the inner controller and being configured for providing at least one substitute instruction signal for controlling the electronic device to the inner controller, if an abnormality related to a signal traffic between the inner controller and the outer controller is detected.

Functionalities of the inner controller and/or the inner controller itself may be isolated from the outer controller on a separate processing engine, like e.g. an FPGA or an embedded processor, optionally certified for real-time, e.g. for enhanced real-time, performance. The inner controller may be configured for providing at least one report signal to the outer controller. The report signal may comprise information about the operating of the control arrangement and/or the electronic device. The report signal may comprise device information about the electronic device, the device information being encoded within the report signal. The report signal may comprise a sensor signal from a sensor observing the electronic device, wherein the sensor may be referred to as observer unit.

The outer controller and the electronic device do not belong to the control arrangement. For example, the outer controller is implemented in an edge platform arranged at another location as the control arrangement and the electronic device, whereas the control arrangement and the electronic device may be arranged at the same location. For example, the control arrangement may be integrated in the electronic device. Alternatively, the control arrangement may be separated from the electronic device, but may be arranged within the same housing, the same room, and/or the same building as the electronic device. The inner controller may communicate with the outer controller with at a slower rate as with the electronic device and/or the smart controller. The electronic device may be a part of a mechatronic device, e.g. a rotor, a motor, a compressor, a pump, a conveyor, and/or a part of an automatic process line of a plant.

The control arrangement may constitute a local platform of a control platform. In addition, the control platform comprises an edge platform remote from the local platform. The control platform may be arranged to control the electronic device. The inner controller and optionally modulator- and observer-functionalities of the control arrangement may be isolated from the outer controller by the abnormality related to the signal traffic between the inner controller and the outer controller. The control arrangement may enable the control platform to continuously operate, even if the abnormality related to a signal traffic between the inner controller and the outer controller is detected. The abnormality related to the signal traffic between the inner controller and the outer controller may be caused by an outage of the edge platform, in particular of the outer controller. The outage may be caused by an update or a damage of the edge platform, in particular of the outer controller.

The signal traffic may comprise signals directed from inner controller to the outer controller and/or from the outer controller to the inner controller. The signals from the inner controller to the outer controller may comprise report signals, e.g. device information of the electronic device or sensor signals from a sensor observing the electronic device, e.g. a speed of an electrical machine constituting the electronic device and/or a position of a stator or a rotor of the electrical machine. Alternatively or additionally, the signals from the inner controller to the outer controller may comprise. The signals from the outer controller to the inner controller may comprise instruction signals, e.g. reference signals, such as a current reference and/or a speed reference.

The main idea behind the control arrangement is that the smart controller ensures continuous operations of the electronic device by substituting, e.g. recovering, missing instruction signals and thereby the corresponding information from the outer controller during the abnormality is present. The smart controller may, for instance, keep the electronic device at a steady-state operating point, or alternatively, automatically lead the electronic device into a safe operating mode. The smart controller may comprise and/or provides artificial intelligence, e.g. in the form of a machine learning model. The smart controller may be able to cope with synchronization while being disconnected from the edge platform, in particular from the outer controller. This may require a decentralized synchronization scheme where the smart controller feature a local clock and synchronize it, e.g. by periodically exchanging information with nearby devices, e.g. the inner controller and/or the electronic device.

The control arrangement may be complemented by a monitoring unit to compensate for the outages of the edge platform, in particular of the outer controller, as explained later.

The main idea is based amongst others on the knowledge that inner control algorithms are well established compared to the rest of the control platform software. Thus, control arrangements comprising inner controllers generally require less functional changes over their product lifecycle. For that reason, the supported hardware is often a real-time coprocessor and a field- gate programmable array (FPGA) where the software portability is reduced in favor of an enhanced real-time performance. So, there are far less outages of the control arrangement and the inner controller than there are for the edge platform and the outer controller.

Another objective of the present invention is achieved by the control platform for controlling the electronic device. The control platform comprises the edge platform and the local platform, the latter comprising the above control arrangement. The outer controller may be configured for receiving at least one report signal from the control arrangement and/or for sending at least one instruction signal to the control arrangement. The control platform comprising the above control arrangement may introduce an architecture and/or a methodology for deploying and managing software components of next generation real-time control systems where closed-loop algorithms are partitioned between the edge platform comprising the outer controller and the local platform comprising the control arrangement and optionally the electronic devices connected to it. The control platform may address cyber physical systems that may require an uninterrupted operation of the corresponding electronic devices. This may be the case in power conversion applications like industrial electric motors for oil and gas pumping, or wind turbines for power generation, where any interruption of the service, due to either expected or unexpected events, directly impacts the operating revenues. For integrating the control platform into a wider control infrastructure, like Supervisory Control and Data Acquisition (SCADA), the control platform may include interfaces to support Programmable Logic Controller (PLC) functionalities, like e.g. IEC61131 and/or communication protocols, like e.g. IEC61850.

Another objective of the present invention is achieved by a method for controlling the electronic device. The method for controlling the electronic device comprises: generating at least one control signal for controlling the electronic device depending on at least one instruction signal from an outer controller; and providing at least one substitute instruction signal for controlling the electronic device to the inner controller, if an abnormality related to a signal traffic between the inner controller and the outer controller is detected. A level of synchronization between the high-level outer control and the low-level inner control by the control arrangement and the corresponding electronic devices may in the high milliseconds range, or asynchronous. The abnormality may be detected by the monitoring unit as explained below. The abnormality may be one of the above abnormalities or another abnormality related to the signal traffic between the inner controller and the outer controller.

Another objective of the present invention is achieved by a method for training the machine learning model for providing the at least one substitute instruction signal, the method comprising the steps of: coupling the machine learning model to the outer controller and the inner controller communicating with each other such that the machine learning model receives the instruction signals from the outer controller directed to the inner controller and the report signals from the inner controller directed to the outer controller; extracting features for training the machine learning model from the report signals; extracting labels for training the machine learning model from the corresponding instruction signals; and using the extracted features and labels for training the machine learning model. The machine learning model may be coupled to the outer controller and the inner controller by coupling the machine learning model to an interface which communicatively couples the outer controller to the inner controller and vice versa.

Another objective of the present invention is achieved by a computer program for controlling the electronic device. The computer program may be configured for carrying out the method for controlling the electronic device when being executed by a processor of a controller. The controller may be the above inner controller. Alternatively, the controller may be the smart controller. Alternatively, the computer program may be carried out in part by the inner controller and in part by the smart controller.

Another objective of the present invention is achieved by a computer-readable medium in which the computer program for controlling the electronic device is stored.

Another objective of the present invention is achieved by a computer-readable medium in which the computer program for training the machine learning model is stored.

According to an embodiment, the smart controller comprises the machine learning model, which has been trained to imitate a behaviour of the outer controller and which is configured for providing the at least one substitute instruction signal for controlling the electronic device to the inner controller, if an abnormality related to the signal traffic between the inner controller and the outer controller is detected. The abnormality may be one of the above abnormalities or another abnormality related to the signal traffic between the inner controller and the outer controller. The behaviour may be transient, unexpected, and/or induced by sudden changes in the electronic device. The smart controller may ensure a continuous operation of the electronic device by recovering the missing instruction signals from the outer controller during the outage of the latter. For example, the smart controller may be configured to imitate the behavior of the outer controller, to keep the electronic device at a steady-state operating point, or alternatively, to automatically lead the electronic device into a safe operating mode.

The machine learning model may have been trained by monitoring the signal traffic between the inner controller and the outer controller in order to learn the normal behaviour of the outer controller. During the normal operation, the inner and outer control loops may be synchronized to a mastered clock managed e.g. by the edge platform and distributed to the connected devices over the shared communication link. In particular, during normal operation, there are one, two or more typical cause-effect chains between the report signals generated by the inner controller and the instruction signals generated by the outer controller and vice versa. The machine learning algorithm may learn from these typical cause-effect chains how the inner controller normally reacts on a given instruction signal from the outer controller and/or how the outer controller normally reacts on a given report signal from the inner controller. Further, the outer controller and/or the inner controller may generate at least some of the corresponding signals on a regular basis independent from the respective other entity, e.g. based on a given time interval. This behaviour may also be learned by the machine learning model by monitoring the signal traffic. The machine learning model may be referred to as behaviour model for modelling the behaviour of the outer controller. This idea may be based on emerging techniques where machine learning tools are applied to control applications dealing with partially known, or unknown, model of the electronic device. Possible solution approaches might involve techniques based on reinforcement learning, adaptive dynamic programming, genetic algorithms, deep neural networks, and so on.

So, the smart controller may feature the machine learning model that infers the control signals needed to solve a control problem for the given electronic device. This may also include the transitioning from one operating point to another; or the dealing of transient unexpected behaviours induced by sudden changes in the electronic device and/or a process controlled by the electronic device. The substitute instruction signals from the smart controller may be applied when the control arrangement no longer receives the instruction signals as control references from the outer controller of the edge platform, or when such instruction signals may be deemed unreliable/compromised. The smart controller may be not aware of the dynamics of the whole control platform and/or of the electronic device, hence does not necessarily require a model of the whole corresponding system. The smart controller, in particular the machine learning model, may learn the dynamics online, e.g. while the edge platform and the local platform including the control arrangement and the electronic device operate in closed loop. Alternatively or additionally, the smart controller, in particular the machine learning model, may be trained offline based on the historical data, the reference models and/or algorithms. The offline training may include the transient behaviours and anomalies that may be typical for the electronic device. The smart controller may also be unaware of the algorithms used by the outer controller which are either developed by the customer or by third-parties. The smart controller may also feature predefined control signals to safely ramp down the electronic device to the safe operating point.

According to an embodiment, the smart controller is configured to receive the instruction signals from the outer controller during normal operation of the outer controller, to check whether the instruction signals and/or instruction frames of the instruction signals comply with a predetermined control strategy, and to provide the at least one substitute instruction signal for controlling the electronic device to the inner controller instead of the instruction signal from the outer controller, if the instruction signals and/or instruction frames from the outer controller do not comply with the predetermined control strategy. If the received instruction signals or instruction frames of the instruction signals comply with the predetermined control strategy during normal operation, the instruction signals or, respectively, instruction frames do not destabilize the system. Therefore, verifying that the received instruction signals and/or frames comply with the predetermined control strategy and substituting them by the substitute instruction signal by the smart controller may be useful to prevent malicious instruction signals and/or frames from being applied to the inner controller. Such malicious instruction signals may be applied by the outer controller or a third entity after a software of the outer controller has been upgraded, e.g. by a compromised patch. The normal operation of the outer controller may be defined by an absence of any abnormality related to the signal traffic between the inner controller and the outer controller. So, during the normal operation, the machine learning model may be trained or used to verify the instruction signals and to provide the substitute instruction signal if necessary, and, if the abnormality related to the signal traffic between the inner controller and the outer controller is detected, the machine learning model may be used to provide the substitute instruction signal instead of the instruction signal expected from the outer controller. So, during the normal operation, the smart controller may also verify that the received control frames comply with the implemented control strategy and would not destabilize the system. This is useful, for instance, to prevent malicious instruction and/or reference signals from being applied after the outer controller software was upgraded by a compromised patch. The predetermined control strategy may define a regime of operating conditions being within predetermined constraints, e.g. related to safety.

According to an embodiment, the control arrangement comprises an observer unit coupled to the inner controller and at least one sensor. The observer unit may be configured for sampling and/or processing at least one sensor signal from the sensor and for generating and/or sending at least one feedback signal to the inner controller depending on the sensor signal. The control arrangement may also be configured for sending at least one feedback signal to the outer controller depending on the sensor signal. The at least one sensor may be configured for measuring at least one parameter of the electronic device, wherein the inner controller may be configured for generating the at least one control signal for controlling the electronic device depending on the feedback signal. The control signal may be the same control signal which has been generated depending on the instruction signal from the outer controller. So, the control signal may be generated depending on the instruction signal from the outer controller and depending on the feedback signal. Alternatively, the control signal may be another signal as that which has been generated depending on the instruction signal from the outer controller. So, the inner controller may generate a first control signal depending on the instruction signal from the outer controller and a second control signal depending on the feedback signal only.

According to an embodiment, the control arrangement comprises the interface being coupled to the inner controller and being configured for transferring the report signal to the outer controller and for receiving the instruction signal for controlling the electronic device from the outer controller. At the interface communicatively coupling the inner controller to the outer controller, the inner controller and the outer controller may exchange control data, in particular the instruction signal and optionally the report signal, at a first data rate that meets the stability requirements, and the bandwidth of the communication channel. In contrast, the device data exchanged within the control arrangement and/or between the inner controller and the electronic device may be transferred at a second data rate which is higher than the first data rate. The first data rate may be in the range of milliseconds and the second data rate may be in the range of microseconds. The machine learning model may be coupled to the interface in order to monitor and learn from the signal traffic between the inner controller and the outer controller.

According to an embodiment, the control arrangement comprises the monitoring unit which is electrically coupled to the interface. The monitoring unit may be configured for monitoring the signal traffic between the outer controller and the inner controller, and for detecting the abnormality related to the signal traffic between the outer controller and the inner controller. The monitoring unit may analyse the signal traffic, in particular the data traffic, on a communication channel between the outer controller and the inner controller to determine when the smart controller may have to undertake the control from the outer controller. The communication channel may be referred to as communication link. In coordination with the smart controller, the monitoring unit may determine when the received instruction signals, instruction frames of the instruction signals, and/or reference signals are compromised. So, the monitoring unit may analyse the signal, e.g. data, traffic on the communication channel to determine when the actions from the smart controller need to be applied. In coordination with the smart controller the monitoring unit may also determine when the received instruction signals and/or frames are compromised. The abnormality may be missing, corrupted, malicious, and/or compromised instruction signals or instruction frames of the instruction signals and/or instruction signals or instruction frames of instruction signals, e.g. due to a channel outage or a security breach, that could destabilize an implemented control strategy. The monitoring unit may detect missing, corrupted, or compromised control frames, to determine when the edge platform undergoes an unscheduled maintenance or is temporarily unavailable. It may also detect missing and malicious instruction and/or control frames, due to channel outages of the communication channel or a security breach that could destabilize the implemented control strategy. The smart controller, instead, may learn from all the signals passing the interface to infer the behavioural model of the outer controller and, optionally, of the physical electronic device.

According to an embodiment, the substitute instruction signal is related to a transitioning from one operating point of the electronic device to another operating point of the electronic device, and/or to a dealing with the behaviour of the electronic device. The other operating point may be a safer operating point as the one operating point. So, the substitute instruction signal may refer to a ramping down of the electronic device to the safe operating point.

According to an embodiment, the method for controlling the electronic device comprises the steps of: receiving the instruction signals from the outer controller during normal operation of the outer controller; checking whether the instruction signals and/or instruction frames of the instruction signals comply with the predetermined control strategy; and providing the at least one substitute instruction signal for controlling the electronic device to the inner controller instead of the instruction signal from the outer controller, if the instruction signals and/or instruction frames from the outer controller do not comply with the predetermined control strategy.

According to an embodiment, the machine learning model is trained during normal operation of the outer controller and the inner controller. For example, the machine learning algorithm may be trained while the outer and inner controller operate in a closed loop. The inner control loops may be closed within the local platform, e.g. within the control arrangement. The inner control loops may feature all the observer and control functionalities need to ensure stability during a steady-state at a single operating point.

According to an embodiment, the machine learning model is trained offline based on historical data, reference models and/or algorithms. The offline training may comprise transient behaviours and anomalies that are typical for the electronic device.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a block diagram illustrating an exemplary embodiment of a control platform.
Fig. 2 schematically shows a flow diagram illustrating an exemplary embodiment of a method for training a machine learning model for providing at least one substitute instruction signal.
Fig. 3 schematically shows a flow diagram illustrating an exemplary embodiment of a method for controlling an electronic device.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

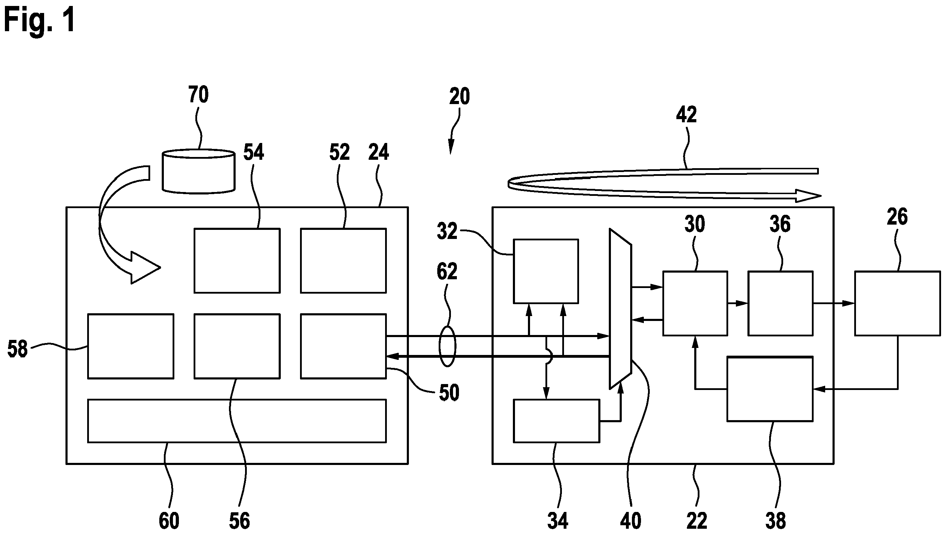

Fig. 1 schematically shows a block diagram illustrating an exemplary embodiment of a control platform 20. The control platform 20 comprises a local platform and an edge platform 24.

The local platform comprises a control arrangement 22 and an electronic device 26, which is controlled by the control arrangement 22. The control arrangement 22 comprises an inner controller 30, a smart controller 32, a monitoring unit 34, a processing module 36, an observer unit 38, and an interface 40. The processing module 36 may be configured to control issue control commands for the electronic device. The electronic device 26 may be or may comprise an electrical machine, e.g. a generator or electric motor. For example, the electronic device may be a pump or any other device using an electrical machine.

The inner controller 30 may generate control signals which may be processed by the processing module 36 before being applied to the electronic device 26. The processing module 36 may for example provide one or more switching signals for power electronics in the electronic device 26. Alternatively, the inner controller 30 may completely processes the control signals by itself and may issue control commands directly to the electronic device 26. One or more sensors (not shown) may be coupled to the electronic device 26. The sensors may be arranged for sensing one, two or more processing parameters of the electronic device 26. The processing parameters may be one, two or more out of a group of parameters. The group of parameters may comprise a current of the electronic device 26, a rotational speed of the electronic device 26, or shaft position of the electronic device 26. The data relating to the sensed parameters may be received and interpreted by the observer unit 38. The observer unit 38 may share its observations and/or measurements, e.g. the corresponding sensor signals, with the inner controller 30 and optionally with the outer controller 50. The inner controller 30 may generate the control signals at least in part depending on the observations of the observer unit 38. Alternatively, the inner controller 30 may receive the data relating to the sensed parameters directly from the sensors and may generate the control signals at least in part depending on the sensed parameters.

The inner controller 30, the smart controller 32 and the monitoring unit 34 each are coupled to the interface 40. The interface 40 enables the communication between the control arrangement 22 and the edge platform 24 by establishing a communication link 62 between the control arrangement 22 and the edge platform 24. The communication link 62 may be unreliable. The local platform, in particular the control arrangement 22, may form an inner-loop control 42 for the electronic device 26.

The edge platform 24 may comprise an outer controller 50, a supervision module 52, a user interface 54, a task scheduler 56, a connectivity module 58, and an operating system 60. The outer controller 50 may receive report signals from the local platform, i.e., the control arrangement 22, and/or may send instruction signals to the local platform via the communication link 62. The report signal may comprise information about the operation of the control arrangement 22 and/or the electronic device 26. The report signal may comprise device information about the electronic device 26, the device information being encoded within the report signal. The report signal may comprise a sensor signal from the observer unit 38, e.g. from a sensor of the observer unit 38. The instruction signals may be provided by the outer controller 50 on a regular basis, at predetermined times, in predetermined time intervals, and/or in reaction to the report signals. The supervision module 52 may provide information about a health, efficiency, and/or performance of the electronic device 26. The user interface 54 may enable a user to interact with the edge platform 24. The user interface 54 may comprise input means, e.g. a keyboard, a mouse, and/or a microphone, and/or output means, e.g. a display and/or speakers. The task scheduler 56 may schedule the mixed-criticality tasks of the edge platform. The connectivity module 58 provides communication interfaces to a wider control infrastructure, like Supervisory Control and Data Acquisition (SCADA). The edge platform 50 may receive data, e.g. configurations for the edge platform 50 and/or authentication data, from a database 70.

The outer controller 50 and/or the edge platform 24 may be arranged at another location as the control arrangement 22 and the electronic device 26, whereas the control arrangement 22 or one or more parts of the control arrangement 22, and the electronic device 26 may be arranged at the same location. For example, the inner controller 30 may be integrated in the electronic device 26. Alternatively, the inner controller 30 may be separated from the electronic device 26, but may be arranged within the same housing, the same room, and/or the same building as the electronic device 26.

The inner controller 30 is coupled to the electronic device 26 and is configured for generating at least one control signal for controlling the electronic device 26 depending on at least one instruction signal from the outer controller 50. The smart controller 32 may be coupled to the inner controller 30 and is configured for providing at least one substitute instruction signal for controlling the electronic device 26 to the inner controller 30, if an abnormality related to a signal traffic between the inner controller 30 and the outer controller 50 is detected, e.g. on the communication link 62. The inner controller 30 may comprise a processing engine, like e.g. an FPGA or an embedded processor, optionally certified for real-time, e.g. for enhanced real-time, performance. The inner controller 30 and/or the smart controller 32 may be embodied as software modules, as hardware modules, or as a combination of both. The inner controller 30 may communicate with the outer controller 50 with at a slower rate as with the electronic device 26 and/or the smart controller 32. The electronic device 26 may be a part of a mechatronic device, e.g. a pump, a motor, a rotor, a compressor, and/or a part of an automatic process line of a plant.

The control platform 20 may be arranged to control the electronic device 26. The inner controller 30 and optionally modulator- and observer-functionalities of the control arrangement 22 may be isolated from the outer controller 50 by the abnormality related to the signal traffic between the inner controller 30 and the outer controller 50. The control arrangement 22 may enable the control platform to continuously operate, even if the abnormality related to a signal traffic between the inner controller 30 and the outer controller 50 is detected. The abnormality related to the signal traffic between the inner controller 30 and the outer controller 50 may be caused by an outage of the edge platform 24, in particular of the outer controller 50. The outage may be caused by an update or a damage of the edge platform 24, in particular of the outer controller 50 or the operating system 60. The signal traffic between the inner controller 30 and the outer controller 50 may comprise the instruction signals from the outer controller 50 to the inner controller 30 and optionally the report signals from the inner controller 30 to the outer controller 50.

The smart controller 32 may ensure continuous operations of the electronic device 26 by substituting, e.g. recovering, missing instruction signals and thereby the corresponding information from the outer controller 50 during the abnormality is present. The smart controller 32 may, for instance, imitate the behavior of the outer controller 50, keep the electronic device 26 at a steady-state operating point, or alternatively, automatically lead the electronic device 26 into a safe operating mode. The smart controller 32 may comprise and/or provides artificial intelligence, e.g. in the form of a machine learning model. The smart controller 32 may be able to cope with synchronization while being disconnected from the edge platform 24, in particular from the outer controller 50. This may require a decentralized synchronization scheme where the smart controller 32 feature a local clock and synchronize it, e.g. by periodically exchanging information with nearby devices, e.g. the inner controller 30 and/or the electronic device 26.

The smart controller 32 may comprise the machine learning model, in particular the core algorithm of the machine learning model. The machine learning model may have been trained to imitate a behaviour of the outer controller 50. The machine learning model may be configured for providing the at least one substitute instruction signal for controlling the electronic device 26 to the inner controller 30, if the abnormality related to the signal traffic between the inner controller 30 and the outer controller 50 is detected. The behaviour may be transient, unexpected, and/or induced by sudden changes in the electronic device 26 and/or a process controlled by the electronic device 26. The smart controller 32 may ensure a continuous operation of the electronic device 26 by recovering the missing instruction from the outer controller 50 during the outage of the latter. For example, the smart controller 32 may be configured to keep the electronic device 26 at a steady-state operating point, or alternatively, automatically lead the electronic device 26 into a safe operating mode. The substitute instruction signals from the smart controller 32 may be applied when the control arrangement 22 no longer receives the instruction signals as control references from the outer controller 50 of the edge platform 24, or when such instruction signals may be deemed unreliable/compromised. The smart controller 32, in particular the machine learning model, may learn the dynamics online, e.g. while the edge platform 24 and the local platform including the control arrangement 22 and the electronic device 26 operate in closed loop, as explained below. Alternatively or additionally, the smart controller 32, in particular the machine learning model, may be trained offline based on the historical data, the reference models and/or algorithms, as explained below. The offline training may include the transient behaviours and anomalies that may be typical for the electronic device 26. The smart controller 32 may also feature predefined action sequences by the corresponding control signals to safely ramp down the electronic device to the safe operating point.

The smart controller 32 may be configured to receive the instruction signals from the outer controller 50 during normal operation of the outer controller 50, to check whether the instruction signals and/or instruction frames of the instruction signals comply with a predetermined control strategy, and to provide the at least one substitute instruction signal for controlling the electronic device 26 to the inner controller 30 instead of the instruction signal from the outer controller 50, if the instruction signals and/or instruction frames from the outer controller 50 do not comply with the predetermined control strategy. The smart controller 32 may prevent malicious instruction signals and/or frames from being applied to the inner controller 30. Such malicious instruction signals may be applied by the outer controller 50 or a third entity after a software of the outer controller 50 has been upgraded, e.g. by a compromised patch. There is no abnormality related to the signal traffic between the inner controller 30 and the outer controller 50 detected during the normal operation of the outer controller 50. So, during the normal operation, the machine learning model may be trained or used to verify the instruction signals and to provide the substitute instruction signal if necessary, and, if the abnormality related to the signal traffic between the inner controller 30 and the outer controller 50 is detected, the machine learning model may be used to provide the substitute instruction signal instead of the instruction signal expected from the outer controller 50. So, during the normal operation, the smart controller 32 may also verify that the received control frames comply with the implemented control strategy and would not destabilize the system. The predetermined control strategy may define a regime of operating conditions being within predetermined constraints, e.g. related to safety.

The observer unit 38 may be coupled to the inner controller 30 and at least one sensor (not shown). The control arrangement 22 may be configured for sampling and/or processing at least one sensor signal from the sensor and for sending at least one feedback signal to the inner controller 30 depending on the sensor signal. The at least one sensor may be configured for measuring at least one parameter of the electronic device 26, wherein the inner controller 30 may be configured for generating the at least one control signal for controlling the electronic device 26 depending on the feedback signal. The control signal may be the same control signal which has been generated depending on the instruction signal from the outer controller 50. So, the inner controller 30 may generate a first control signal depending on the instruction signal from the outer controller 50 and a second control signal depending on the feedback signal only.

The interface 40 may be coupled to the inner controller 30. The interface 40 may be configured for transferring the report signal to the outer controller 50 and for receiving the instruction signal for controlling the electronic device 26 from the outer controller 50. At the interface 40, which communicatively couples the inner controller 30 to the outer controller 50, the inner controller 30 and the outer controller 50 may exchange control data, in particular the instruction signal and optionally the report signal, at a first data rate that meets the stability requirements, and the bandwidth of the communication link 62. In contrast, the device data exchanged within the control arrangement 22 and/or between the inner controller 30, the smart controller 32, the monitoring unit 34, the processing module 36, the observer unit 38, and/or the interface 40 may be transferred at a second data rate which is higher than the first data rate. The first data rate may be in the range of milliseconds and the second data rate may be in the range of microseconds. The machine learning model may be coupled to the interface 40 in order to monitor and learn from the signal traffic between the inner controller 30 and the outer controller 50.

The monitoring unit 34 may be electrically coupled to the interface 40. The monitoring unit 34 may be configured for monitoring the signal traffic between the inner controller 30 and the outer controller 50, and for detecting the abnormality related to the signal traffic between the inner controller 30 and the outer controller 50. The monitoring unit 34 may analyse the signal traffic, in particular the data traffic, on the communication channel between the outer controller 50 and the inner controller 30, i.e. on the communication link 62, to determine when the smart controller 32 may have to undertake the control from the outer controller 50. In coordination with the smart controller 32, the monitoring unit 34 may determine when the received instruction signals and/or instruction frames of the instruction signals are compromised. So, the monitoring unit 34 may analyse the signal, e.g. data, traffic on the communication link 62 to determine when the actions from the smart controller 32 need to be applied. The monitoring unit 34 may determine when the received instruction signals and/or instruction frames of the instruction signals are compromised, by recognizing a change in a frame frequency, a change in a source/destination address, tampered frame contents, and/or unauthorized connections. In coordination with the smart controller 32, the monitoring unit 34 may also determine when the received instruction signals and/or frames are compromised. The abnormality may be missing, corrupted, malicious, and/or compromised instruction signals or instruction frames of the instruction signals, e.g. due to a channel outage or a security breach, that could destabilize an implemented control strategy. The monitoring unit 34 may detect missing, corrupted, or compromised instruction frames, to determine when the edge platform 24 undergoes an unscheduled maintenance or is temporarily unavailable. The monitoring unit 34 may also detect missing and malicious instruction frames, due to channel outages of the communication link 62 or a security breach that could destabilize the implemented control strategy. The smart controller 32, instead, may learn from all the signals passing the interface 40 to infer the behavioural model of the outer controller 50 and, optionally, of the physical electronic device 26.

The substitute instruction signal may be related to a transitioning from one operating point of the electronic device 26 to another operating point of the electronic device 26. Alternatively or additionally, the substitute instruction signal may be related to a dealing with the behaviour of the electronic device 26. The other operating point may be a safer operating point as the one operating point. So, the substitute instruction signal may refer to a ramping down of the electronic device 26 to the safe operating point.

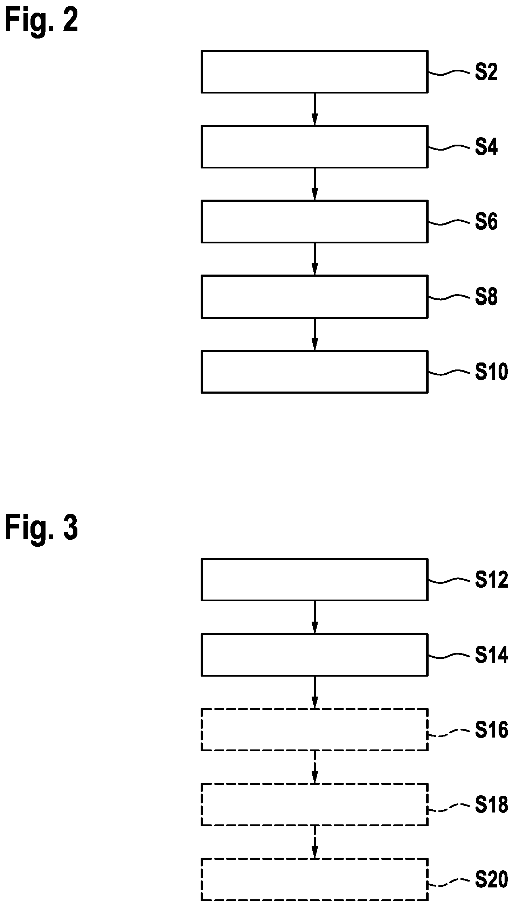

Fig. 2 schematically shows a flow diagram illustrating an exemplary embodiment of a method for training the above machine learning model for providing the at least one substitute instruction signal. The machine learning model may be implemented in the smart controller 32. The machine learning model may be represented as a program code of an algorithm, with the program code being stored on a memory of the smart controller 32. The machine learning model may be trained in order to be able to imitate the behaviour of the outer controller 50, if the outer controller 50 is not available or if the signals from the outer controller 50 are compromised.

The machine learning model may be trained during normal operation of the outer controller 50 and the inner controller 30. For example, the machine learning algorithm may be trained while the outer and inner controller 30, 50 operate in a closed loop. The inner control loops 42 may be closed within the local platform, e.g. within the control arrangement 22. The inner control loops 42 may feature all the observer and control functionalities need to ensure stability during a steady-state at a single operating point.

Alternatively or additionally, the machine learning model may be trained offline based on historical data, reference models and/or algorithms. The offline training may comprise transient behaviours and anomalies that are typical for the electronic device 26. The transient behaviours and anomalies may comprise a changing reference to the outer control, and/or grid voltage drips.

The method for training the machine learning model such that the machine learning model may provide the at least one substitute instruction signal may comprise the following steps:
In a step S2, the machine learning model may be coupled to the outer controller 50 and the inner controller 30 while they are communicating with each other. The machine learning model may be coupled to the outer controller 50 and the inner controller 30 by coupling the machine learning model to the interface 40, which communicatively couples the outer controller 50 to the inner controller 30 and vice versa.

In a step S4, the machine learning model may receive the instruction signals from the outer controller 50. The instruction signals may be directed to the inner controller 30. The machine learning model may further receive the report signals from the inner controller 30. The report signals may be directed to the outer controller 50. The instruction signals and/or the report signals may be branched off from the interface 40 such that the inner controller 30 may receive the instruction signals and that the outer controller 50 may receive the report signals, while the same signals or digital twins or copies of the signals are received by the smart controller 32 and thereby the machine learning model.

In a step S6, features for training the machine learning model may be extracted from the report signals. The features may for example comprise an actual speed and/or shaft position of the electronic device 26, wherein in this context the electronic device 26 may be a mechatronic device.

In a step S8, labels for training the machine learning model may be extracted from the corresponding instruction signals. In particular, at least some labels may be extracted from that one of the instruction signals, which followed directly after and/or in reaction to the report signal from which the corresponding feature has been extracted. The labels may for example comprise a current, a frequency, and/or a phase of the instruction signals. The features and the labels form a dataset for training the machine learning algorithm. The dataset may be stored in the form of a table in which the features are assigned to their corresponding labels.

So, the machine learning model may be trained by monitoring the signal traffic between the inner controller 30 and the outer controller 50 in order to learn the normal behaviour of the outer controller 50. During the normal operation, the inner and outer control loops may be synchronized to a mastered clock managed e.g. by the edge platform and distributed to the connected devices over the shared communication link. In particular, during normal operation, there are one, two or more typical cause-effect chains between the report signals generated by the inner controller 30 and the instruction signals generated by the outer controller 50 and vice versa. The machine learning algorithm may learn from these typical cause-effect chains how the inner controller 30 normally reacts on a given instruction signal from the outer controller 50 and/or how the outer controller 50 normally reacts on a given report signal from the inner controller 30. Further, the outer controller 50 and/or the inner controller 30 may generate at least some of the corresponding signals on a regular basis independent from the respective other entity, e.g. based on a given time interval. This behaviour may also be learned by the machine learning model by monitoring the signal traffic. The machine learning model, for example using a deep neural network, may be referred to as behaviour model for modelling the behaviour of the outer controller 50. Possible training approaches may involve techniques based on imitation learning, regression, genetic algorithms, and so on. The model may be trained offline or online. The offline training may be carried out with a set of collected observations, and the online training may be carried out while the controller is operating.

Alternatively or additionally, the machine learning model may be trained offline based on the historical data, the reference models and/or the algorithms. The offline training may comprise transient behaviours and anomalies that are typical for the electronic device 26, e.g. a change of a reference signal provided by a user to the outer controller 50 or grid voltage drips. Features extracted for the offline training may comprise an actual speed and/or a shaft position of an electrical machine constituting the electronic device. The labels extracted for the offline training may comprise a current, a frequency, and/or a phase of the corresponding signal.

In a step S10, the extracted features and labels may be used for training the machine learning model. The training of the machine learning algorithm may be carried out by a dedicated training algorithm. The training algorithm may provide imitation learning, regression, or a genetic algorithm. The machine learning model and the training algorithm may be built by using a machine learning framework, such as Scikit-learn, Keras etc. The machine learning algorithm may be referred to as core artificial intelligence.

Fig. 3 schematically shows a flow diagram illustrating an exemplary embodiment of a method for controlling the electronic device 26. The method for controlling the electronic device 26 may be carried out by the smart controller 32. The method for controlling the electronic device 26 may comprise the following steps:
In a step S12, at least one control signal for controlling the electronic device 26 may be generated depending on at least one instruction signal from the outer controller 50.

In a step S14, at least one of the substitute instruction signals for controlling the electronic device 26 may be provided to the inner controller 30, if the abnormality related to the signal traffic between the inner controller 30 and the outer controller 50 is detected. The substitute instruction signal may be provided by the smart controller 32, in particular by the machine learning model implemented within the smart controller 32. A level of synchronization between the high-level outer control of the edge platform 24 and the low-level inner control of the local platform may be in the high milliseconds range, or asynchronous. The abnormality may be detected by the monitoring unit 34 as explained above.

Optionally, the method for controlling the electronic device 26 may comprise the following further steps:
In a step S16, the instruction signals from the outer controller 50 may be received during the normal operation of the outer controller 50.

In a step S18, it may be checked whether the instruction signals and/or instruction frames of the instruction signals comply with the predetermined control strategy.

In a step S20, the at least one substitute instruction signal for controlling the electronic device 26 may be provided to the inner controller 30 instead of the instruction signal from the outer controller 50, if the instruction signals and/or instruction frames from the outer controller 50 do not comply with the predetermined control strategy.

The above steps S12 and S14 may be carried out before, after or simultaneously to the above steps S 16 to S20. The above steps S12 and S14, and the above steps S16 to S20 may be implemented in the same computer program or may be implemented as separate computer programs.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: control platform
- 22: control arrangement
- 24: edge platform
- 26: electronic device
- 30: inner controller
- 32: smart controller
- 34: monitoring unit
- 36: processing module
- 38: observer unit
- 40: interface
- 42: inner-loop control
- 50: outer controller
- 52: supervision module
- 54: user interface
- 56: task scheduler
- 58: connectivity module
- 60: operating system
- 62: communication link
- 70: database
- S2-S20: steps two to twenty

## Claims

1. Control arrangement (22) for controlling an electronic device (26), the control arrangement (22) comprising:
an inner controller (30) being coupled to the electronic device (26) and being configured for generating at least one control signal for controlling the electronic device (26) depending on at least one instruction signal from an outer controller (50); and
a smart controller (32) coupled to the inner controller (30) and being configured for providing at least one substitute instruction signal for controlling the electronic device (26) to the inner controller (30) if an abnormality related to a signal traffic between the inner controller (30) and the outer controller (50) is detected.

2. Control arrangement (22) in accordance with claim 1, wherein
the smart controller (32) comprises a machine learning model, which has been trained to imitate a behaviour of the outer controller (50) and which is configured for providing at least one substitute instruction signal for controlling the electronic device (26) to the inner controller (30) if the abnormality related to the signal traffic between the inner controller (30) and the outer controller (50) is detected.

3. Control arrangement (22) in accordance with one of the preceding claims, wherein the smart controller (32) is configured to
receive the instruction signals from the outer controller (50) during normal operation of the outer controller (50);
check whether the instruction signals and/or instruction frames of the instruction signals comply with a predetermined control strategy; and
provide at least one substitute instruction signal for controlling the electronic device (26) to the inner controller (30) instead of the instruction signal from the outer controller (50) if the instruction signals and/or instruction frames from the outer controller (50) do not comply with the predetermined control strategy.

4. Control arrangement (22) in accordance with one of the preceding claims, comprising
an observer unit (34) coupled to the inner controller (30) and at least one sensor and being configured for sampling and/or processing at least one sensor signal from the sensor and for sending at least one feedback signal to the inner controller (30) depending on the sensor signal, the at least one sensor being configured for measuring at least one parameter of the electronic device (26),
wherein the inner controller (30) is configured for generating the at least one control signal for controlling the electronic device (26) depending on the feedback signal.

5. Control arrangement (22) in accordance with one of the preceding claims, comprising:
an interface (40) being coupled to the inner controller (30) and being configured for transferring the report signal to the outer controller (50) and for receiving the instruction signal for controlling the electronic device (26) from the outer controller (50).

6. Control arrangement (22) in accordance with claim 4, comprising:
a monitoring unit (34) being electrically coupled to the interface (40) and being configured for monitoring the signal traffic between the outer controller (50) and the inner controller (30) and for detecting the abnormality related to the signal traffic between the outer controller (50) and the inner controller (30).

7. Control platform (20) for controlling an electronic device (26), the control platform (20) comprising:
the control arrangement (22) according to one of the preceding claims; and
the outer controller (50) being configured for receiving at least one report signal and/or sensor signal from the control arrangement (22) and/or for sending at least one instruction signal to the control arrangement (22).

8. Method for controlling an electronic device (26), the method comprising:
generating at least one control signal for controlling the electronic device (26) depending on at least one instruction signal from an outer controller (50); and
providing at least one substitute instruction signal for controlling the electronic device (26) to the inner controller (30) if an abnormality related to a signal traffic between the inner controller (30) and the outer controller (50) is detected.

9. Method in accordance with claim 8, wherein
the substitute instruction signal is related to a transitioning from one operating point of the electronic device (26) to another operating point of the electronic device (26), and/or to a dealing with a behaviour of the electronic device (26).

10. Method in accordance with claim 8 or 9, comprising the steps of:
receiving the instruction signals from the outer controller (50) during normal operation of the outer controller (50);
checking whether the instruction signals and/or instruction frames of the instruction signals comply with a predetermined control strategy; and
providing at least one substitute instruction signal for controlling the electronic device (26) to the inner controller (30) instead of the instruction signal from the outer controller (50) if the instruction signals and/or instruction frames from the outer controller (50) do not comply with the predetermined control strategy.

11. Method for training a machine learning model for providing at least one substitute instruction signal, the method comprising the steps of
coupling the machine learning model to an outer controller (50) and an inner controller (30) communicating with each other such that the machine learning model receives instruction signals from the outer controller (50) directed to the inner controller (30) and report signals from the inner controller (30) directed to the outer controller (50);
extracting features for training the machine learning model from the report signals; extracting labels for training the machine learning model from the corresponding instruction signals; and
using the extracted features and labels for training the machine learning model.

12. Method in accordance with claim 11, wherein
the machine learning model is trained during normal operation of the outer controller (50) and the inner controller (30).

13. Method in accordance with one of claims 11 or 12, wherein
the machine learning model is trained offline based on historical data, reference models and/or algorithms.

14. A computer program for controlling an electronic device (26), the computer program when being executed by a processor of a controller being configured for carrying out the method in accordance with one of claims 8 to 10.

15. A computer-readable medium in which a computer program according to claim 14 is stored.
